# EUROPEAN PATENT APPLICATION

(11) **EP 3 311 966 A1**
(43) Date of publication of application: **25.04.2018**
(21) Application number: 17195159.3
(22) Date of filing: 06.10.2017
(51) Int. Cl.: B27L 7/00, B27L 7/06, B23D 59/00

(54) **FIREWOOD PROCESSOR**

(30) Priority: 11.10.2016 FI 20165769
(71) Applicant: Agromaster Oy, 54710 Lemi (FI)
(72) Inventor: Pitkäniemi, Tarmo, 54710 Lemi (FI)
(74) Representative: Papula Oy

(57) **Abstract**

The invention relates to a firewood processor, comprising a feeding arrangement (1) for feeding a log (2), a cutting device (3) for cutting the log, a limiter (4) for determining the length of a log round (5) to be cut, a splitting blade (6), the level of which is adjustable according to the thickness of the log round, and a pushing device (7) for pushing the log round through the splitting blade. According to the invention, the limiter (4) is attached to the splitting blade (6) so as to move with it in the vertical direction.

## Description

### FIELD OF THE INVENTION

The invention relates to a firewood processor, and specifically to an arrangement in connection with its splitting blade.

### BACKGROUND OF THE INVENTION

In firewood processors, a log to be cut is fed to a cutting device towards a limiter, the location of the limiter determining the length of a log round to be cut. The cut round then generally drops into a splitting trough, from where it is pushed through a splitting blade, such that it splits into two or more parts, depending on the structure of the splitting blade and the size of the round.

In the known firewood processors the limiter is supported to the body, or to a part fixedly attached to the body of the firewood processor, the location of the limiter being adjustable in the log feeding direction either in steps or continuously. In well-encased processors the limiter is often arranged in a relatively small space between the cutting device and the splitting blade, such that its quick adjustment is difficult. Secondly, when logs close to the maximum thickness are processed by the processor, the limiter is often in the way, preventing the log rounds from freely dropping into the splitting space, and possibly preventing the entire splitting movement. Also, it may turn the log round to a wrong, transverse position on the splitting blade.

### OBJECT OF THE INVENTION

The object of the invention is to overcome the defects of the prior art mentioned above. Specifically, the object of the invention is to disclose a new arrangement for a firewood processor, where the limiter operates faultlessly, regardless of the log round thicknesses and their variations.

### SUMMARY OF THE INVENTION

The firewood processor according to the invention comprises a feeding arrangement for feeding a log and a cutting device for cutting the log fed, as well as a limiter by means of which the length of a round of log to be cut is determined. Further, the firewood processor comprises a splitting blade, the level of which is adjustable according to the thickness of the round of log, and a pushing device for pushing the round of log through the splitting blade. According to the invention, the limiter is attached to the splitting blade so as to move with it in the vertical direction. Thus, the limiter abutting the head of the log to be cut always moves with the adjustment of the splitting blade, being relatively low when small-diameter logs are processed, and rising higher when processing thicker logs. Thus, the limiter does not form an obstacle, even when large-diameter log rounds are processed.

The feeding arrangement used may be a scaly table structure, a rotatable feed belt, different types of roller arrangements, slanted and partly gravitational feeding, or the feeding may be purely manual.

Preferably, the limiter comprises a body supported to the splitting blade, such as a beam or a bar or the like, and a support surface abutting the head of the log being fed. The support surface may just be the end face of the limiter body, or it may be formed by a separate plate supported or attached to the body, or the like.

In one embodiment of the invention, the firewood processor comprises a manual lever structure for adjusting the vertical position of the splitting blade and the limiter as required by the thickness of the log round. Thus, the adjustment of the vertical position of the splitting blade and the limiter is carried out by visually estimating the thickness of the log by the machine operator and by using the manual lever according to the estimation.

In another embodiment of the invention, the firewood processor comprises an automatic lever structure for adjusting the vertical position of the splitting blade and the limiter automatically. In this case, the adjustment of the level of the splitting blade is generally received according to the log as it is moving to the cutting stage, but it may also be received according to a cut log round.

In a preferred embodiment of the invention, an adjustment is provided between the limiter for stopping the movement of the log and the splitting blade, such that the position of the limiter may be adjusted relative to the splitting blade in the longitudinal direction of the log being processed along a line defined by the log. Thus, the length of the round to be cut from the log may be adjusted as desired within a determined range. Generally, this adjustment range is approximately of the order of 20 - 60 cm in firewood processors.

The adjustment of the limiter defining the length of the log round may be continuous, in which case it comprises for example a suitable pressure screw or the like, by means of which the position of the adjustment may be adjusted continuously.

The adjustment may also be implemented with steps, for example such that the limiter has a line of holes, and the splitting blade has one corresponding hole. Thus, by positioning the limiter at a desired position and by inserting a suitable locking pin through the corresponding aligned holes, the limiter can be locked in a specific position.

Even though the limiter rises farther away from the splitting trough, when the thickness of the logs grows there may be situations where the limiter is in the way of a processed log round during its processing. Therefore, in one embodiment of the invention, the limiter is provided with a turning arrangement that allows the front part of the limiter to turn up freely, if needed. By free turning it is meant that the turning is not locked, but the limiter keeps its place by the effect of gravity, and due to a sufficient upwardly applied force it may freely rise and move out of the way.

Suitably, the turning arrangement is implemented by means of a hinge on which the limiter is able to turn up from the operating position, and a stop, such as a limiter pin, preventing the limiter from turning down from the operating position.

### ADVANTAGES PROVIDED BY THE INVENTION

The firewood processor according to the invention provides considerable advantages over the prior art. When the limiter defining the length of the log round moves according to the thickness of the log, i.e. with the vertical movement of the splitting blade, the limiter is not in the way to prevent the splitting, and the cut log round is given significantly more free space to move in the splitting chamber after being cut.

Thus, the log round to be split is caused more easily, reliably, and with greater probability in the right position, to drop in front of the splitting blade. This improves the quality of firewood as the log rounds are always split in their longitudinal direction, and on the other hand increases work efficiency as the log rounds do not have to be separately turned to the right splitting position in the splitting chamber.

### BRIEF DESCRIPTION OF THE DRAWINGS

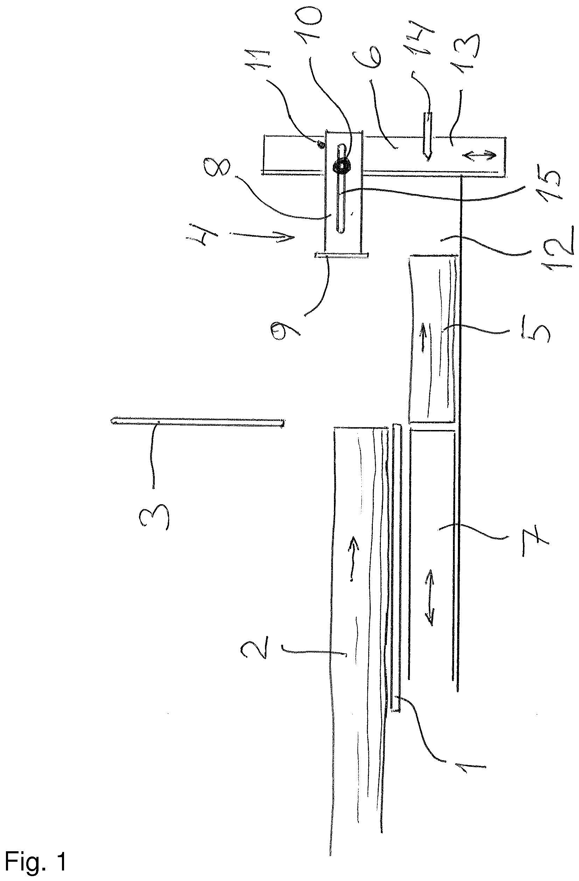

In the following, the invention will be described in detail with reference to the accompanying drawing, showing a schematic illustration of the basic structures of a firewood processor according to the invention.

### DETAILED DESCRIPTION OF THE INVENTION

As shown in the drawing, the firewood processor comprises a feeding arrangement 1 for feeding a log 2 being processed into the firewood processor to be cut and split in stages. The feeding arrangement may include a scaly table structure, a rotatable belt, rotatable and/or freely rotating rollers or other corresponding structure, or just manual log feeding. The log 2 is fed up to a limiter 4, i.e. against it, the limiter determining the length of a log round 5 to be cut from the log by means of a cutting device 3. The cutting device 3 may be a chain saw, a circular saw blade, a knife blade or any other structure causing the log to be cut at a desired point.

The cut log round 5 drops down to a splitting space 12 where a pushing device 7 operated by an actuator, generally by a hydraulic cylinder, pushes the log round 5 through a splitting blade 6 at the other end of the splitting space. The splitting blade 6 comprises a vertical part 13 and a horizontal part 14, and it is liftable and lowerable in the vertical direction, such that the log round 5 being split splits only through the vertical part 13 into two, or through the vertical part 13 and the horizontal part 14 into four pieces.

The vertical adjustment of the splitting blade 6 may be implemented, in the way known per se, manually by turning a lever according to the thickness of the log round to be split, or the firewood processor may have an arrangement for measuring the thickness of the log or the log round, the level of the splitting blade being adjusted on that basis. This type of arrangement may be based on a purely mechanical lever structure, receiving its adjustment according to the surface of the log 2 in order to move the splitting blade in the vertical direction. Also, electronic measuring methods may be used, where based on the measured thickness of the log or the log round, the splitting blade is lifted or lowered by means of a controlled actuator, such as a hydraulic cylinder or an electric motor.

The limiter 4 determining the length of the log round 5 to be cut is attached to the splitting blade 6 that is movable in an up-down adjustable manner. The limiter 4 comprises a horizontal beam-type body 8 and, at its one end, a plate or support surface 9 that is transversal relative to the body, i.e. vertical. The log 2 pushed by the feeding device 1 always stops at this support surface 9. The body 8 has an elongated adjustment slit 15, through which there is arranged a hinge pin of a hinge 10 supported to the splitting blade. The hinge pin also includes a tightening feature, whereby the body 8 may be moved in the horizontal direction along the adjustment slit 15 and locked at a desired point, such that the horizontal distance between the support surface 9 and the cutting device 3 is adjusted as desired. However, the locking of the hinge 10 does not prevent the body 8 from turning up on the hinge, although it prevents the horizontal movement of the body. Behind the hinge above the body 8, there is also arranged a stop 11 for preventing the body from turning down, so that the body 8 keeps its horizontal position by the effect of gravity. The body 8 is, however, able to freely turn up if needed, and also to return to its basic position as soon as the obstacle has been removed.

The described attachment between the splitting blade 6 and the limiter 4 and their joint operation enable flexible processing of log rounds with different sizes, because the limiter automatically moves according to the thickness of the log, and is thus not in the way to prevent thicker log rounds from turning and being processed in the splitting space, which easily happens with fixed log length limiters supported to the body of a firewood processor.

The invention has been described above by way of examples with reference to the accompanying drawing; however, different embodiments of the invention are possible within the scope defined by the claims.

## Claims

1. A firewood processor, comprising a feeding arrangement (1) for feeding a log (2), a cutting device (3) for cutting the log, a limiter (4) for determining the length of a log round (5) to be cut, a splitting blade (6), the level of which is adjustable according to the thickness of the log round, and a pushing device (7) for pushing the log round through the splitting blade, **characterized in that** the limiter (4) is attached to the splitting blade (6) so as to move with it in the vertical direction.

2. The firewood processor according to claim 1, **characterized in that** the limiter (4) comprises a body (8) attached to the splitting blade (6) and a support surface (9) abutting the head of the log (2) being fed.

3. The firewood processor according to claim 1 or 2, **characterized in that** the firewood processor comprises a manual lever structure for adjusting the vertical position of the splitting blade and the limiter as required by the thickness of the log round.

4. The firewood processor according to claim 1 or 2, **characterized in that** the firewood processor comprises an automatic lever structure for adjusting the vertical position of the splitting blade and the limiter automatically, whereby the adjustment is received according to the thickness of the log to be cut or the log round having been cut.

5. The firewood processor according to any one of claims 1-4, **characterized in that** an adjustment is provided between the limiter (4) and the splitting blade (6) for adjusting the length of the round to be cut from the log.

6. The firewood processor according to claim 5, **characterized in that** the adjustment is operated continuously.

7. The firewood processor according to claim 5, **characterized in that** the adjustment is implemented with steps.

8. The firewood processor according to any one of claims 1-7, **characterized in that** the limiter (4) comprises a turning arrangement that allows the front part of the limiter to turn up freely if needed.

9. The firewood processor according to claim 8, **characterized in that** the turning arrangement comprises a hinge (10) on which the limiter (4) is able to turn up from the operating position, and a stop (11) preventing the limiter from turning down from the operating position.
